# EUROPEAN PATENT APPLICATION

(11) **EP 4 768 359 A1**
(43) Date of publication of application: **01.07.2026**
(21) Application number: 25211259.4
(22) Date of filing: 27.10.2025
(51) Int. Cl.: B60W 50/14

(54) **VEHICLE START-UP SUPPORT DEVICE, VEHICLE START-UP SUPPORT METHOD AND COMPUTER PROGRAM**

(30) Priority: 24.12.2024 JP 2024227837
(71) Applicant: TOYOTA JIDOSHA KABUSHIKI KAISHA, Toyota-shi, Aichi-ken 471-8571 (JP)
(72) Inventor: OMURA, Toshinori, Toyota-shi, Aichi-ken, 471-8571 (JP); YAMASAKI, Shinya, Toyota-shi, Aichi-ken, 471-8571 (JP); SUTO, Hiroaki, Toyota-shi, Aichi-ken, 471-8571 (JP)
(74) Representative: TBK

(57) **Abstract**

The vehicle start-up support device includes a user operation detection part (14) configured to detect an operation of a user of a vehicle (1) with respect to the vehicle (1) prior to start-up of the vehicle (1), and a notification control part (15) configured to control notification to the user. The notification control part is configured to perform a predetermined notification to the user when the user operation detection part (14) detects, as the operation of the user, an operation different from a start-up method of the vehicle (1) that is selectively set from among a plurality of operation methods a predetermined number of times.

## Description

### TECHNICAL FIELD

The present invention relates to a vehicle start-up support device, a vehicle start-up support method, and a computer program.

### BACKGROUND ART

Conventionally, as a typical start-up method of a vehicle, an operation of pressing a push start switch in a state in which a brake pedal is stepped is known. PTL 1 describes executing a control of pushing back the brake pedal when the above operation is performed by a user in order to cause the user of the vehicle to reliably recognize the start-up of the vehicle.

### [CITATIONS LIST]

### PATENT LITERATURE

PTL 1 Japanese Unexamined Patent Publication No. 2006-132501

### SUMMARY

### TECHNICAL PROBLEM

However, the user does not always perform the correct operation to start up the vehicle. In the case where the correct operation is not performed by the user, the state in which the vehicle can be started up is not achieved in the first place, and therefore the technique described in PTL 1 cannot be applied. In such a case, it is desirable to assist the user in starting up the vehicle by causing the user to recognize an error in the operation.

In view of the above problem, an object of the present invention is to cause a user of a vehicle to recognize that the user's operation is inappropriate as a start-up method of the vehicle.

### SOLUTION TO PROBLEM

The summary of the present invention is as follows.
(1) A vehicle start-up support device, comprising: a user operation detection part configured to detect an operation of a user of a vehicle with respect to the vehicle prior to start-up of the vehicle; and a notification control part configured to control notification to the user, wherein the notification control part is configured to perform a predetermined notification to the user when the user operation detection part detects, as the operation of the user, an operation different from a start-up method of the vehicle that is selectively set from among a plurality of operation methods a predetermined number of times.
(2) The vehicle start-up support device described in above (1), wherein the plurality of operation methods include a first operation method of starting up the vehicle by a stepping operation of a brake pedal of the vehicle and a pressing operation of a push start switch of the vehicle, and a second operation method of starting up the vehicle only by the stepping operation.
(3) The vehicle start-up support device described in above (2), wherein the notification control part is configured to perform the predetermined notification to the user when the user operation detection part detects the stepping operation as the operation of the user the predetermined number of times, if the start-up method of the vehicle is set to the first operation method.
(4) The vehicle start-up support device described in above (3), wherein the predetermined notification includes a notification suggesting changing the start-up method of the vehicle to the second operation method.
(5) The vehicle start-up support device described in above (3), wherein the predetermined notification includes a notification of information relating to the start-up method of the vehicle.
(6) The vehicle start-up support device described in above (5), wherein the notification of the information relating to the start-up method of the vehicle includes lighting of the push start switch.
(7) The vehicle start-up support device described in above (5) or (6), wherein the notification control part is configured to display the information relating to the start-up method of the vehicle on a display device of the vehicle.
(8) The vehicle start-up support device described in above (7), wherein the display device is a meter display.
(9) The vehicle start-up support device described in any one of above (5) to (8), wherein the information relating to the start-up method of the vehicle is the first operation method.
(10) The vehicle start-up support device described in any one of above (1) to (9), wherein the predetermined number of times is an integer equal to or greater than 2.
(11) The vehicle start-up support device described in any one of above (1) to (10), wherein the predetermined notification includes an alert notification.
(12) A vehicle start-up support method executed by a computer, including: detecting an operation of a user of a vehicle with respect to the vehicle prior to start-up of the vehicle; and performing a predetermined notification to the user when detecting, as the operation of the user, an operation different from a start-up method of the vehicle that is selectively set from among a plurality of operation methods a predetermined number of times.
(13) A computer program causing a computer to: detect an operation of a user of a vehicle with respect to the vehicle prior to start-up of the vehicle; and perform a predetermined notification to the user when detecting, as the operation of the user, an operation different from a start-up method of the vehicle that is selectively set from among a plurality of operation methods a predetermined number of times.

According to the present invention, it is possible to cause a user of a vehicle to recognize that the user's operation is inappropriate as a start-up method of the vehicle.

### BRIEF DESCRIPTION OF DRAWINGS

FIG. 1 is a schematic configuration diagram of a vehicle start-up support system including a vehicle start-up support device according to an embodiment of the present invention.
FIG. 2 is a diagram schematically illustrating an interior of a vehicle in front of a driver's seat and a passenger's seat.
FIG. 3 is a diagram illustrating an example of a vehicle on which a vehicle start-up support system is mounted.
FIG. 4 is a functional block diagram of a processor of an ECU.
FIG. 5 is a diagram illustrating an example of visual notification of the first operation method displayed on the meter display.
FIG. 6 is a flow chart showing the control routine of the vehicle start-up support process in the present embodiment.
FIG. 7 is a diagram illustrating an example of visual notification that suggests changing the start-up method of the vehicle to the second operation method.

### DESCRIPTION OF EMBODIMENTS

Hereinafter, embodiments of the present invention will be described in detail with reference to the drawings. In the following description, the same reference numerals are given to the same constituent elements.

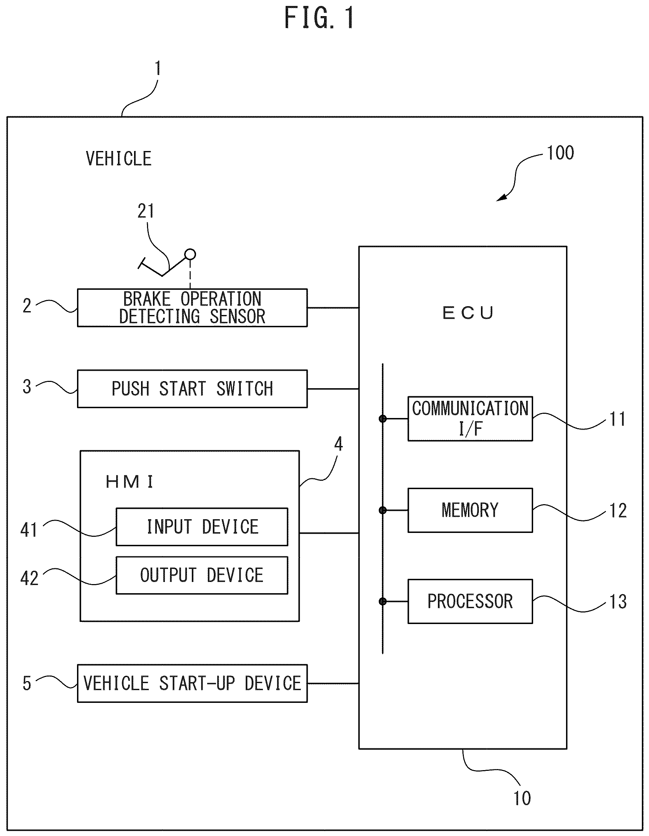

FIG. 1 is a schematic configuration diagram of a vehicle start-up support system 100 including a vehicle start-up support device according to an embodiment of the present invention. The vehicle start-up support system 100 is mounted on the vehicle 1 and assists a user (for example, a driver) of the vehicle 1 in starting up the vehicle 1. In the present embodiment, the vehicle 1 is a four-wheeled care.

As shown in FIG. 1, the vehicle start-up support system 100 includes a brake operation detecting sensor 2, a push start switch 3, a human machine interface (HMI) 4, a vehicle start-up device 5, and an electronic control unit (ECU) 10. The brake operation detecting sensor 2, the push-start switch 3, the HMI 4, and the vehicle start-up device 5 are electrically connected to the ECU 10 via an in-vehicle network or the like compliant with a standard such as CAN (Controller Area Network) or Ethernet.

The brake operation detecting sensor 2 is provided on a brake pedal 21 of the vehicle 1, and detects an operation of the brake pedal 21 by a user of the vehicle 1 (hereinafter, simply referred to as a "user"). For example, the brake operation detecting sensor 2 is configured as a pressure sensor that detects a pressure applied to the brake pedal 21, an angle sensor that detects a rotational angle or a displacement amount of the brake pedal 21, an electric switch that generates an on/off signal by the stepping operation of the brake pedal 21, or the like. Note that the brake operation detecting sensor 2 may be configured as a non-contact type sensor such as an optical sensor or a magnetic sensor. The output of the brake operation detecting sensor 2 is transmitted to the ECU 10.

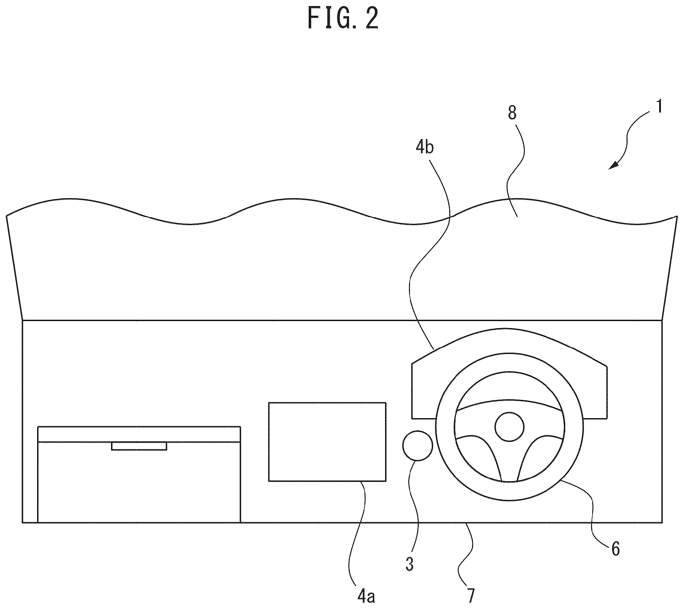

FIG. 2 is a diagram schematically illustrating an interior of the vehicle 1 in front of the driver's seat and the passenger's seat. As shown in FIG. 2, the push start switch 3 is arranged in the dashboard 7 below the windshield 8. For example, the push start switch 3 is arranged in the vicinity of the driver's seat so as to be operated by the user, and specifically, is arranged in the vicinity of the steering wheel 6 (in the example of FIG. 2, on the left side of the steering wheel 6). When pressed by the user, the push start switch 3 outputs a signal corresponding to the pressing operation of the user. The output of the push start switch 3 is transmitted to the ECU 10.

The HMI 4 is provided in the vehicle interior and exchanges data between the vehicle 1 and the user. The HMI 4 includes an input device 41 and an output device 42.

The input device 41 receives an input from a user of the vehicle 1. The input device 41 includes at least one of a touch panel, an operation button, an operation switch, and a microphone. The HMI 4 transmits the input information input to the input device 41 by the user to the ECU 10.

The output device 42 performs a notification to the user of the vehicle 1. The output device 42 includes at least one of a display device (e.g., a display, etc.), a warning light, a speaker, a buzzer, and a vibrating unit. The HMI 4 notifies the user of information corresponding to the signal transmitted from the ECU 10 via the output device 42.

As shown in FIG. 2, in the present embodiment, the HMI 4 includes an infotainment display 4a and a meter display 4b. Each of the infotainment display 4a and the meter display 4b is provided in the vehicle interior so as to be visually recognized by the user, and displays various types of information to the user based on a signal transmitted from the ECU 10.

In the present embodiment, the infotainment display 4a is incorporated in a part of the dashboard 7 between the driver's seat and the passenger's seat, i.e., in the center console. In this case, the infotainment display 4a is also referred to as a center display. The infotainment display 4a displays multimedia information, map information, a screen for various settings of the vehicles 1, and the like. The infotainment display 4a is configured as a touch panel operable by a user. Accordingly, the infotainment display 4a functions as the input device 41 and the output device 42.

The meter display 4b is arranged at a position that is easier to be visually recognized by the user (the driver of the vehicle 1) than the infotainment display 4a. Specifically, the meter display 4b is incorporated as an instrument panel in the dashboard 7 in front of the steering wheel 6, i.e., in the dashboard 7 in front of the driver's seat. The meter display 4b displays status information of the vehicle 1, specifically, information required for driving the vehicle 1 such as a vehicle speed and a SOC (State Of Charge) of a battery, and a warning light. The meter display 4b is configured, for example, as a liquid crystal display (LCD) or an organic EL (Electro Luminescence) display. Accordingly, the meter display 4b functions as the output device 42. Note that the meter display 4b may be configured as a touch panel that can be operated by a user, and may function as the input device 41 and the output device 42.

The vehicle start-up device 5 makes the vehicle 1 a start-up state (a travelable state) in response to a signal transmitted from the ECU 10. Hereinafter, a specific embodiment of the vehicle start-up device 5 will be described.

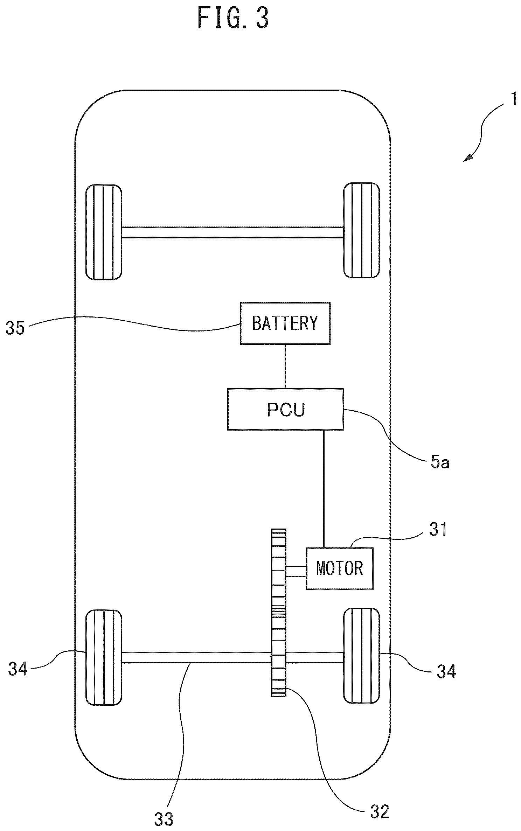

FIG. 3 is a diagram illustrating an example of the vehicle 1 on which the vehicle start-up support device 100 is mounted. As shown in FIG. 1, the vehicle 1 includes a motor 31, a speed reducer 32, an axle 33, wheels 34, a battery 35, and a power control unit (PCU) 5a.

In the present embodiment, the vehicle 1 is a so-called electric vehicle (BEV: Battery Electric Vehicle), and only the motor 31 functions as a drive device of the vehicle 1. The motor 31 is connected to the speed reducer 32, and an output of the motor 31 is supplied to the speed reducer 32. The output of the motor 31 supplied to the speed reducer 32 is transmitted to the wheels 34 via the axle 33, and drives the wheels 34. Therefore, the motor 31 can output power for traveling of the vehicle 1.

The battery 35 is a rechargeable secondary battery, and includes, for example, a lithium-ion battery, a nickel-hydrogen battery, an all-solid-state battery, a sodium-ion battery, and the like. The battery 35 can be charged by electric power supplied from an external power source, regenerative electric power generated during deceleration of the vehicle 1, or the like. When the motor 31 outputs power for travelling, the electric power stored in the battery 35 is supplied to the motor 31 via the PCU 5a.

The PCU 5a includes an inverter, a DCDC converter, and the like, and is connected to the battery 35 and the motor 31. The inverter converts DC power supplied from the battery 35 into AC power when supplying power from the battery 35 to the motor 31. The inverter controls the rotational speed and the output torque of the motor 31 by adjusting the amount and frequency of the AC power supplied to the motor 31. The DCDC converter converts the power of the high voltage (e.g., 200V to 800V) supplied from the battery 35 into the power of the low voltage (e.g., 12V), and supply the power of the low voltage to electronic devices (e.g., the HMI 4) of the vehicle 1.

When the operation for stating up the vehicle 1 is performed by the user, the ECU 10 transmits to the PCU 5a a signal instructing to start up the vehicle 1. The PCU 5a receiving the signal performs an initialization process including a self-diagnosis of the system, a control of a main relay that connects the battery 35 to a high-voltage circuit, and the like, and makes the vehicle 1 the start-up state. That is, in the present embodiment, the PCU 5a functions as the vehicle start-up device 5.

The ECU 10 executes various controls of the vehicle 1. As shown in FIG. 1, the ECU 10 includes a communication interface 11, a memory 12 and a processor 13. The communication interface 11 and the memory 12 are connected to the processor 13 via a signal line. Note that in the present embodiment, one ECU 10 is provided, but a plurality of ECUs may be provided for various functions. Further, the communication interface 11, the memory 12, and the processor 13 may be configured as one integrated circuit, or may be configured as separate circuits.

The communication interface 11 has an interface circuitry for connecting the ECU 10 to the in-vehicle network. The ECU 10 is connected to other in-vehicle devices via the communication interface 11. The communication interface 11 transmits signals received from the brake operation detecting sensor 2, the push start switch 3, and the input device 41 to the processor 13. Further, the communication interface 11 transmits signals output from the processor 13 to the output device 42 and the vehicle start-up device 5.

The memory 12 has, for example, a volatile semiconductor memory (e.g., DRAM (Dynamic Random Access Memory), SRAM (Static Random Access Memory), and the like), and a nonvolatile semiconductor memory (e.g., ROM (Read Only Memory), EEPROM (Electrically Erasable Programmable Read Only Memory), a flash memory, and the like). The memory 12 stores temporary data, a computer program (a control program of the ECU 10) used for various processes by the processor 13, setting data of the ECU 10, log data, vehicle-information, and the like. The memory 12 is an example of a storage part.

The processor 13 has one or more CPU (Central Processing Unit) and its peripheral circuitry. The processor 13 executes a computer program stored in the memory 12. The processor 13 may further have other arithmetic circuits such as a logical arithmetic unit, a numerical arithmetic unit, or a graphic processing unit.

In the present embodiment, the ECU 10 functions as the vehicle start-up support device for assisting the user in starting up the vehicle 1. In particular, the ECU 10 assists the user in starting up the vehicle 1 by causing the user to recognize that the user's operation is inappropriate as the start-up method of the vehicle 1. Note that the ECU 10 is an example of the vehicle start-up support device.

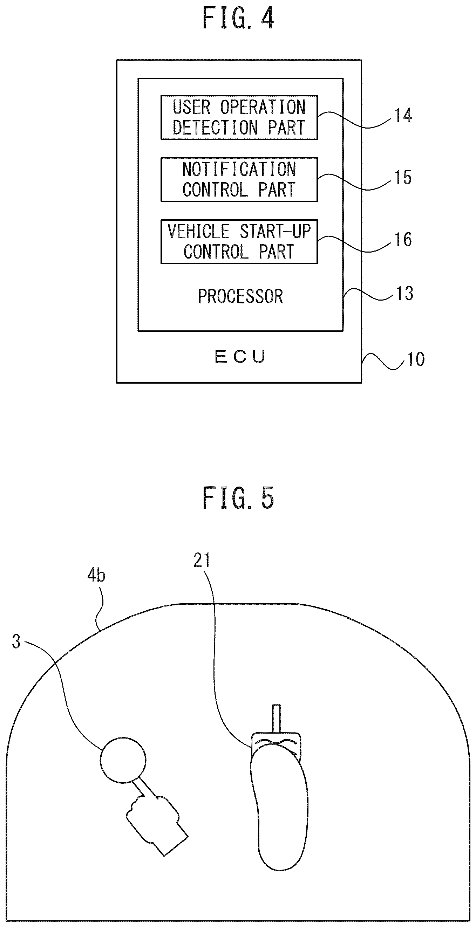

FIG. 4 is a functional block diagram of the processor 13 of the ECU 10. As shown in FIG. 4, the processor 13 has a user operation detection part 14, a notification control part 15 and a vehicle start-up control part 16. The user operation detection part 14, the notification control part 15 and the vehicle start-up control part 16 are functional modules realized by the processor 13 of the ECU 10 executing a computer program stored in the memory 12 of the ECU 10. Note that these functional modules may be realized by dedicated arithmetic circuits provided in the processor 13.

The user operation detection part 14 detects an operation of the user with respect to the vehicle 1 when the vehicle 1 is not started up. In other words, the user operation detection part 14 detects an operation of the user with respect to the vehicle 1 prior to start-up of the vehicle 1 (hereinafter, referred to as "pre-startup user operation"). In the present embodiment, the user operation detection part 14 detects an operation of the user when the user riding on the vehicle 1 attempts to start up the vehicle 1, and detects a pre-startup user operation based on the outputs of the brake operation detecting sensor 2 and the push start switch 3.

The notification control part 15 controls notification to the user. In the present embodiment, the notification control part 15 performs a notification to the user via the output device 42 of the HMI 4. For example, the notification control part 15 displays the notification content to the user on the display device of the output device 42.

The vehicle start-up control part 16 controls start-up of the vehicle 1. Specifically, the vehicle start-up control part 16 executes a process for starting up the vehicle 1 when the user operation detection part 14 detects a preset start-up method of the vehicle 1 as a pre-startup user operation. In the present embodiment, the vehicle start-up control part 16 executes a process for starting up the vehicle 1 via the PCU 5a functioning as the vehicle start-up device 5.

In the present embodiment, in the vehicle 1, the start-up method of the vehicle 1 can be selectively set from among a plurality of operation methods. The user selectively sets the start-up method of the vehicle 1 from among a plurality of operation methods via the input device 41 of the HMI 4. For example, the plurality of operating methods include a first operation method of starting up the vehicle 1 by a stepping operation of the brake pedal 21 and a pressing operation of the push start switch 3, and a second operation method of starting up the vehicle 1 only by the stepping operation of the brake pedal 21. As a result, the start-up method of the vehicle 1 can be set according to the preference of the user, and thus the usability of the vehicle 1 can be enhanced. For example, a user who prefers a conventionally familiar start-up method can select the first operation method (a composite operation combining two operations), and a user who prefers a start-up method by a simple operation can select the second operation method (a single operation consisting of one operation).

If the first operation method and the second operation method are provided as a plurality of operating methods, the start-up method of the vehicle 1 is alternatively selected from the first operation method and the second operation method. Therefore, in the vehicle 1 (for example, the vehicle 1 at the time of shipment) in the initial state before the user sets the start-up method of the vehicle 1, the start-up method of the vehicle 1 is set in advance to either the first operation method or the second operation method. In the present embodiment, the start-up method of the vehicle 1 is set to the first operation method in the vehicle 1 in the initial state, and the stepping operation of the brake pedal 21 and the pressing operation of the push start switch 3 are required by the user to start up the vehicle 1. The setting information of the start-up method of the vehicle 1 are stored, for example, in the memory 12 of the ECU 10. When the start-up method of the vehicle 1 is changed from the first operation method to the second operation method by the user, the start-up method of the vehicle 1 stored in the memory 12 is changed from the first operation method to the second operation method.

If the start-up method of the vehicle 1 is set to the first operation method, the vehicle start-up control part 16 executes a process for starting up the vehicle 1 when the user operation detection part 14 detects the first operation method as a pre-startup user operation. That is, when the user presses the push start switch 3 in a state where the brake pedal 21 is stepped in the vehicle 1 before start-up, the vehicle 1 transitions to the start-up state.

On the other hand, if the start-up method of the vehicle 1 is set to the second operation method, the vehicle start-up control part 16 executes a process for starting up the vehicle 1 when the user operation detection part 14 detects the second operation method as a pre-startup user operation. That is, when the user steps the brake pedal 21 in the vehicle 1 before start-up, the vehicle 1 transitions to the start-up state regardless of the presence or absence of the pressing operation of the push start switch 3.

However, the user does not always perform the correct operation in order to start up the vehicle 1. In particular, if the user is unfamiliar with the operation of the vehicle 1 due to the reason that the vehicle 1 is a rental car or the like, or if the start-up method of the vehicle 1 is set by a person other than the user, the user may perform an operation that differs from a preset start-up method of the vehicle 1. In such cases, there is a possibility that the user may suspect a failure of the vehicle 1 or may force the user to take extra time and effort such as searching for the start-up method of the vehicle 1 via a mobile terminal (for example, a smart phone) of the user.

Therefore, in the present embodiment, the notification control part 15 performs a predetermined notification to the user when the user operation detection part 14 detects, as a pre-startup user operation, an operation different from the start-up method of the vehicle 1 that is selectively set from among a plurality of operation methods. This allows the user to recognize that the user's operation is inappropriate as the start-up method of the vehicle 1, and thus can effectively assist the user in starting up the vehicle 1.

For example, it is conceivable that the user attempts to start up the vehicle 1 only by the stepping operation of the brake pedal 21 if the start-up method of the vehicle 1 is set to the first operation method, i.e., if both the stepping operation of the brake pedal 21 and the pressing operation of the push start switch 3 are required for starting up the vehicle 1. In this case, since the process for starting up the vehicle 1 is not started, it is desirable to notify the user of an error in the operation. On the other hand, if the start-up method of the vehicle 1 is set to the second operation method, i.e., if only the stepping operation of the brake pedal 21 is required for starting up the vehicle 1, it is conceivable that the user attempts to start up the vehicle 1 by both the stepping operation of the brake pedal 21 and the pressing operation of the push start switch 3. However, in this case, since the process for starting up the vehicle 1 is started by the pressing operation of the push start switch 3, there is little need to notify the user of an error in the operation.

Therefore, in the present embodiment, if the start-up method of the vehicle 1 is set to the first operation method, the notification control part 15 performs a predetermined notification to the user when the user operation detection part 14 detects the stepping operation of the brake pedal 21 a predetermined number of times as a pre-startup user operation. As a result, it is possible to cause the user to recognize that the currently set start-up method of the vehicle 1 is not only the stepping operation of the brake pedal 21, and to prompt the user to perform the pressing operation of the push start switch 3 as an additional operation.

The predetermined number of times is set to an integer of 1 or more, preferably an integer of 2 or more. By setting the predetermined number of times to an integer of 2 or more, notification to the user is frequently performed, and it is possible to suppress frequent notifications to the user and suppress the user from feeling annoyed by the notification. In particular, when the start-up method of the vehicle 1 is set to the first operation method, it is possible to suppress the user from being notified, in spite of the user's attempt to perform the pressing operation of the push start switch 3 after the stepping operation of the brake pedal 21.

The predetermined notification for causing the user to recognize an erroneous operation is, for example, a notification of information relating to the start-up method of the vehicle 1. As a result, it is possible to suggest the correct operation to the user as the start-up method of the vehicle 1. In this case, for example, the notification control part 15 displays information relating to the start-up method of the vehicle 1 on the display device of the output device 42. This can enhance the visibility of such information and thus facilitate the user to understand the correct start-up method.

For example, the notification control part 15 displays information relating to the start-up method of the vehicle 1 on the meter display 4b. The meter display 4b has higher visibility to a user (driver of the vehicle 1) facing the front than other in-vehicle displays (e.g., the infotainment display 4a). Therefore, the visibility of such information can be further enhanced by displaying such information on the meter display 4b.

When the first operation method among the first operation method and the second operation method is set to the start-up method of the vehicle 1, a specific example of the information relating to the start-up method of the vehicle 1 is the first operation method. In this case, for example, the notification control part 15 displays the first operation method on a display device (e.g., the meter display 4b) of the vehicle 1. This allows the correct start-up method to be directly indicated to the user, thereby enhancing the user's understanding of the correct start-up method.

FIG. 5 is a diagram illustrating an example of visual notification of the first operation method displayed on the meter display 4b. In the example of FIG. 5, the notification control part 15 displays an image indicating the stepping operation of the brake pedal 21 (an image in which a foot is placed on the brake pedal 21) and an image indicating the pressing operation of the push start switch 3 (an image in which the push start switch 3 is pressed by a finger of a hand) on the meter display 4b. By displaying images indicating the start-up method of the vehicle 1 in this way, an intuitive understanding of the start-up method can be facilitated.

Further, the predetermined notification given to the user may include an alert notification. That is, the notification control part 15 may notify the user of an alert via the output device 42 when an operation different from the start-up method of the vehicle 1 is detected a predetermined number of times as the pre-startup user operation. This allows the user to quickly recognize that the operation for starting up the vehicle 1 is incorrect.

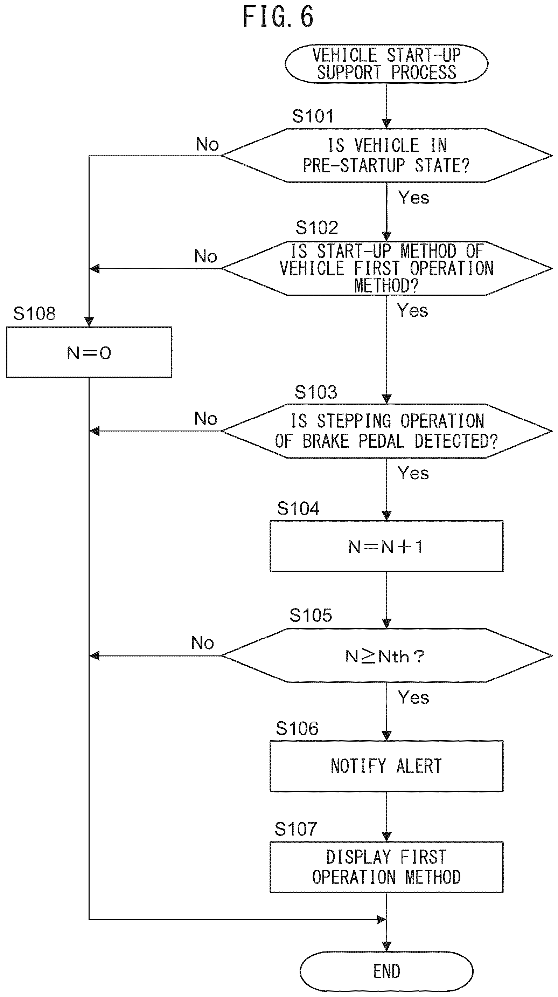

The flow of a process when executing the above-described control for assisting the user in starting up the vehicle 1 will be described below, referring to FIG. 6. FIG. 6 is a flow chart showing the control routine of the vehicle start-up support process in the present embodiment. The present control routine is executed by the processor 13 of the ECU 10 in accordance with a computer program stored in the memory 12 of the ECU 10. For example, the present control routine is started when the door lock of the vehicle 1 is unlocked, and is repeatedly executed at predetermined execution intervals. In this case, electric power is supplied from the battery 35 to the ECU 10 or the like via the PCU 5a using the door unlocking of the vehicle 1 as a trigger.

First, in the step S101, the notification control part 15 determines whether the vehicle 1 is in a pre-startup state. When the user operation detection part 14 has not yet detected the operation set to the start-up method of the vehicle 1, it is determined that the vehicle 1 is in the pre-startup state. If it is determined that the vehicle 1 is in the pre-startup state, the present control routine proceeds to the step S102.

In the step S102, the notification control part 15 determines whether the start-up method of the vehicle 1 is set to the first operation method. For example, the notification control part 15 makes this determination based on the setting information of the start-up method of the vehicle 1 stored in the memory 12 of the ECU 10. If it is determined that the start-up method of the vehicle 1 is set to the first operation method, the present control routine proceeds to the step S103.

In the step S103, the notification control part 15 determines whether the stepping operation of the brake pedal 21 is detected by the user operation detection part 14. The user operation detection part 14 detects the stepping operation of the brake pedal 21 based on the output of the brake operation detecting sensor 2. When it is determined that the stepping operation of the brake pedal 21 is not detected, the present control routine ends. On the other hand, when it is determined that the stepping operation of the brake pedal 21 is detected, the present control routine proceeds to the step S104.

In the step S104, the notification control part 15 updates the detection count N by adding 1 to the detection count N. The detection count N indicates the number of times that the stepping operation of the brake pedal 21 is detected as the pre-startup user operation, and the initial value of the detection count N is set to zero.

Next, in the step S105, the notification control part 15 determines whether the detection count N is equal to or greater than a predetermined number of times Nth. The predetermined number of times Nth is set to, for example, an integer within a range of 2 to 5. When it is determined that the detection count N is less than the predetermined number of times Nth, the present control routine ends. On the other hand, if it is determined that the detection count N is equal to or greater than the predetermined number of times Nth, the present control routine proceeds to the step S106.

In the step S106, the notification control part 15 notifies the user of a visual or audible alert via the output device 42. For example, the notification control part 15 may notify the user of an alert message or an alert image via a display device (e.g., the infotainment display 4a or the meter display 4b) of the output device 42 as a visual alert, or may notify the user of an alert voice or an alert sound via a speaker or a buzzer of the output device 42 as an audible alert. Further, the notification control part 15 may turn on the warning light of the output device 42 as a visual alert.

Next, in the step S107, the notification control part 15 displays the first operation method set to the start-up method of the vehicle 1 on the display device of the output device 42. In this case, for example, the notification control part 15 displays the image as shown in FIG. 5 on the meter display 4b. After the step S107, the present control routine ends.

On the other hand, if it is determined in the step S101 that the vehicle 1 is in the start-up state, or if it is determined in the step S102 that the start-up method of the vehicle 1 is set to the second operation method, the present control routine proceeds to the step S108.

In the step S108, the notification control part 15 resets the detection count N to zero. After the step S108, the control routine ends.

Note that various modifications and variations to the present control routine are possible. For example, in the step S103, the notification control part 15 may determine whether an operation other than the first operation method (composite operation of the stepping operation of the brake pedal 21 and the pressing operation of the push start switch 3) is detected by the user operation detection part 14. Operations other than the first operation method include a single operation by stepping the brake pedal 21 or pressing the push start switch 3, an operation of a shift lever of the vehicle 1, a stepping operation of an accelerator pedal of the vehicle 1, and the like.

Further, the predetermined number of times Nth in the step S105 may be 1. That is, the notification control part 15 may perform a predetermined notification to the user when the user operation detection part 14 detects an operation different from the start-up method of the vehicle 1 as a pre-startup user operation.

Further, the notification control part 15 may light the push-start switch 3 via a light-emitting element provided in the push-start switch 3, in addition to the step S107 or instead of the step S107. That is, the notification control part 15 may perform lighting of the push start switch 3 as the notification of the information relating to the start-up method of the vehicle 1. This makes it possible to prompt the user to perform the pressing operation the push start switch 3 in addition to the stepping operation of the brake pedal 21, and to guide the user to the correct start-up method.

Further, in the step S107, the notification control part 15 may display characters suggesting the first operation method on the display device of the vehicle 1. Further, the notification control part 15 may notify the user of the first operation method by voice via the speaker of the output device 42 instead of the step S107. In these cases, for example, the notification control part 15 notifies the user of characters or voice, such as "Please also press the push start switch."

Further, the notification control part 15 may suggest to the user to change the start-up method of the vehicle 1 to the second operation method via the output device 42 instead of the step S107. That is, the notification control part 15 may perform a notification suggesting changing the start-up method of the vehicle 1 to the second operation method as the predetermined notification. This makes it possible to easily customize the start-up method according to the characteristics of the user, and thus to improve the usability of the vehicle 1.

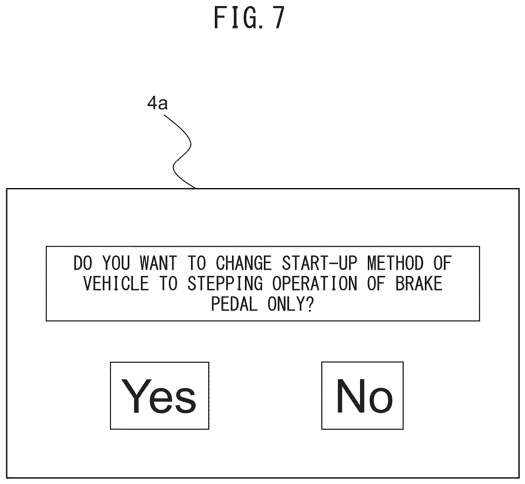

FIG. 7 is a diagram illustrating an example of visual notification suggesting changing the start-up method of the vehicle 1 to the second operation method. In the example of FIG. 7, the notification control part 15 displays characters suggesting changing the start-up method of the vehicle 1 to the second operation method, and an icon (Yes or No) for answering the proposal on the infotainment display 4a. As a result, the user can quickly answer the proposal changing the start-up method of the vehicle 1 by pressing a desired icon.

Note that the notification control part 15 may display only characters suggesting changing the start-up method of the vehicle 1 to the second operation method on the infotainment display 4a or the meter display 4b. Further, the notification control part 15 may suggest changing the start-up method of the vehicle 1 to the second operation method to the user by voice via the speaker of the output device 42. In these cases, for example, the user inputs an answer to the proposal into the microphone of the input device 41 by voice. Further, the meter display 4b may be formed as a touch panel operable by a user, and a visual notification similar to FIG. 7, which includes icons for answer, may be displayed on the meter display 4b.

Further, either the step S106 or the step S107 may be omitted.

Although preferred embodiments of the present invention have been described above, the present invention is not limited to these embodiments, and various modifications and changes can be made within the scope of the claims. For example, the plurality of operations that can be selected as the start-up method of the vehicle 1 may include an operation of a shift lever of the vehicle 1, a start-up instruction by a user's voice, an operation on a portable terminal of the user, and the like. Further, two or more operations can be set to the start-up method of the vehicle 1, unless all of the operations of the plurality of operations are set to the start-up method of the vehicle 1.

Further, the vehicle 1 on which the vehicle start-up support system 100 is mounted may be a vehicle of a gasoline engine or a diesel engine. In this case, a starter motor that starts up the engine to make the vehicle 1 the start-up state functions as the vehicle start-up device 5. Further, the vehicle 1 may be a hybrid vehicle (HEV: Hybrid Electric Vehicle), a plug-in hybrid vehicle (PHEV: Plug-in Hybrid Electric Vehicle), or the like. Further, the vehicle 1 may be an autonomous vehicle in which at least a part of acceleration, braking, and steering of the vehicle 1 is automatically performed.

Further, a server or the like provided outside the vehicle 1 and capable of communicating with the vehicle 1 may function as the vehicle start-up support device. In this case, information for detecting a user's operation, for example, the outputs of the brake operation detecting sensor 2 and the push start switch 3, and the setting information of the start-up method of the vehicle 1 are transmitted from the vehicle 1 to the server, and the ECU 10 of the vehicle 1 performs notification to the user via the output device 42 in response to an instruction from the server.

Further, a computer program that causes a computer to realize the functions of the respective parts included in the processor 13 of the ECU 10 or the processor of the server may be provided in a form stored in a computer-readable recording medium or a form included in a computer program product. The computer-readable recording medium is, for example, a magnetic recording medium, an optical recording medium, or a semiconductor memory.

### [Description of Symbols]

1 Vehicle
10 Electronic control unit (ECU)
13 Processor
14 User operation detection part
15 Notification control part

## Claims

1. A vehicle start-up support device, comprising:
a user operation detection part (14) configured to detect an operation of a user of a vehicle (1) with respect to the vehicle (1) prior to start-up of the vehicle (1); and
a notification control part (15) configured to control notification to the user, wherein
the notification control part (15) is configured to perform a predetermined notification to the user when the user operation detection part (14) detects, as the operation of the user, an operation different from a start-up method of the vehicle (1) that is selectively set from among a plurality of operation methods a predetermined number of times.

2. The vehicle start-up support device according to claim 1, wherein the plurality of operation methods include a first operation method of starting up the vehicle (1) by a stepping operation of a brake pedal (21) of the vehicle (1) and a pressing operation of a push start switch (3) of the vehicle (1), and a second operation method of starting up the vehicle (1) only by the stepping operation.

3. The vehicle start-up support device according to claim 2, wherein the notification control part (15) is configured to perform the predetermined notification to the user when the user operation detection part (14) detects the stepping operation as the operation of the user the predetermined number of times, if the start-up method of the vehicle (1) is set to the first operation method.

4. The vehicle start-up support device according to claim 3, wherein the predetermined notification includes a notification suggesting changing the start-up method of the vehicle (1) to the second operation method.

5. The vehicle start-up support device according to claim 3, wherein the predetermined notification includes a notification of information relating to the start-up method of the vehicle (1).

6. The vehicle start-up support device according to claim 5, wherein the notification of the information relating to the start-up method of the vehicle (1) includes lighting of the push start switch (3).

7. The vehicle start-up support device according to claim 5 or 6, wherein the notification control part (15) is configured to display the information relating to the start-up method of the vehicle (1) on a display device of the vehicle (1).

8. The vehicle start-up support device according to claim 7, wherein the display device is a meter display (4b).

9. The vehicle start-up support device according to any one of claims 5 to 8, wherein the information relating to the start-up method of the vehicle (1) is the first operation method.

10. The vehicle start-up support device according to any one of claims 1 to 9, wherein the predetermined number of times is an integer equal to or greater than 2.

11. The vehicle start-up support device according to any one of claims 1 to 10, wherein the predetermined notification includes an alert notification.

12. A vehicle start-up support method executed by a computer, including:
detecting an operation of a user of a vehicle (1) with respect to the vehicle (1) prior to start-up of the vehicle (1); and
performing a predetermined notification to the user when detecting, as the operation of the user, an operation different from a start-up method of the vehicle (1) that is selectively set from among a plurality of operation methods a predetermined number of times.

13. A computer program causing a computer to:
detect an operation of a user of a vehicle (1) with respect to the vehicle (1) prior to start-up of the vehicle (1); and
perform a predetermined notification to the user when detecting, as the operation of the user, an operation different from a start-up method of the vehicle (1) that is selectively set from among a plurality of operation methods a predetermined number of times.
